Europäisches Patentamt

European Patent Office

Office européen des brevets

(19)

(11) Veröffentlichungsnummer : **0 046 166**
**B1**

(12) **EUROPÄISCHE PATENTSCHRIFT**

(45) Veröffentlichungstag der Patentschrift :
25.07.84

(21) Anmeldenummer : **81103458.6**

(22) Anmeldetag : **07.05.81**

(51) Int. Cl.³ : **B 60 T 15/18, B 60 T 17/18**

(54) Lastabhängig geregelte Zweileitungs-Anhängerbremsanlage.

(30) Priorität : **16.08.80 DE 3031105**

(43) Veröffentlichungstag der Anmeldung :
**24.02.82 Patentblatt 82/08**

(45) Bekanntmachung des Hinweises auf die Patenterteilung : **25.07.84 Patentblatt 84/30**

(84) Benannte Vertragsstaaten :
**AT DE FR GB IT NL SE**

(56) Entgegenhaltungen :
**DE-A- 1 966 569**
**DE-B- 1 237 914**
**DE-C-   801 368**

(73) Patentinhaber : **WABCO Westinghouse Fahrzeugbremsen GmbH
Am Lindener Hafen 21 Postfach 91 12 80
D-3000 Hannover 91 (DE)**

(72) Erfinder : **Pohl, Wolfgang
Am Stühe 27
D-3008 Garbsen 6 (DE)**
Erfinder : **Kiel, Bernd-Joachim
Königsberger Strasse 7
D-3050 Wunstorf 1 (DE)**
Erfinder : **Deike, Karl-Heinz
Feldstrasse 17
D-3017 Pattensen 5 (DE)**
Erfinder : **Reinecke, Erich
Kastanieneck 6
D-3167 Burgdorf (DE)**

(74) Vertreter : **Schrödter, Manfred
WABCO Westinghouse Fahrzeugbremsen GmbH Am
Lindener Hafen 21 Postfach 91 12 80
D-3000 Hannover 91 (DE)**

**Beschreibung**

Die Erfindung betrifft eine lastabhängig geregelte Zweileitungs-Anhängerbremsanlage, gemäß dem Oberbegriff des Anspruchs 1.

Anhängerbremsanlagen, deren Bremkraftregelung lastabhängig erfolgt, sind in der Regel mit einem Anhängerbremsventil, mit mindestens einem lastabhängig gesteuerten Bremskraftregler und mit mindestens einem Relaisventil, zur Verbesserung der Ansprechzeiten der Bremsen, ausgerüstet.

Eine derartige Zweileitungs-Anhängerbremsanlage ist in dem Konstruktionsblatt 971 002, Ausgabe August 1977 der Konstruktionsunterlagen (Europa-Katalog) der Fa. Wabco Fahrzeugbremsen GmbH schematisch dargestellt.

Sowohl der lastabhängig gesteuerte Bremskraftregler als auch das Anhängerbremsventil sind aufwendige Ventileinrichtungen, die einen relativ großen Teil der Kosten einer entsprechenden Anhängerbremsanlage bilden.

Eine Zweileitungs-Anhängerbremsanlage der eingangs genannten Art ist aus der DE-A-1 966 569 bekannt. In der Notbremseinrichtung dieser bekannten Anlage wird die Vorratsluft dem Vorratsbehälter über ein Rückschlagventil zugeführt. Parallel zum Rückschlagventil ist ein federbelasteter Umschaltkolben angeordnet, der mit einem als Stößel ausgebildeten Teil ein eine Verbindung des Vorratsbehälters mit dem Steuerauslaß der Notbremseinrichtung steuerndes Ventil betätigen kann.

In Normalstellung beaufschlagt der Druck in der Vorratsleitung den Umschaltkolben und schiebt ihn gegen die Federkraft in seine eine Stellung, in der das Ventil in der Verbindung zwischen Vorratsbehälter und Steuerauslaß geschlossen und der Bremsanschluß der Notbremseinrichtung mit dem Steuerauslaß verbunden ist.

Bei nachlassendem Vorratsdruck wird der Umschaltkolben von der Feder in seine andere Stellung geschoben, in der er die Verbindung zwischen Bremsanschluß und Steuerauslaß unterbricht und mit dem als Stößel ausgebildeten Teil das Ventil zwischen Vorratsbehälter und Steuerauslaß öffnet. Dadurch kann Luft aus dem Vorratsbehälter über den Steuerauslaß in die Steuerkammer des nachgeschalteten Bremskraftreglers strömen und eine Notbremsung auslösen.

Die getrennte Anordnung von Rückschlagventil und Umschaltkolben ist bei dieser Lösung kompliziert und mit großem Aufwand verbunden.

Aus der DE-C-801 368 ist es bekannt, in einem Steuerventil für eine- oder Zweileitungs-Anhängerbremse Rückschlagventil und Kolben dadurch baulich zu vereinigen, daß das Dichtelement des Kolbens mit einer Lippe versehen wird, die sich bei Beaufschlagung in einer Richtung umlegt, wodurch das Dichtelement in dieser Richtung durchlässig ist, und die sich bei Beaufschlagung in Gegenrichtung spreizt, wodurch das Dichtelement in dieser Richtung abdichtet und sperrt.

Dieser Stand der Technik gibt jedoch keinen Hinweis für die Vereinfachung einer gattungsgemäßen Zweileitungs-Anhängerbremsanlage.

Der Erfindung liegt deshalb die Aufgabe zugrunde, eine Zweileitungs-Anhängerbremsanlage der eingangs genannten Art zu vereinfachen und mit einfachen Mitteln zu verbilligen.

Diese Aufgabe wird durch die im Anspruch 1 aufgeführte Erfindung gelöst.

Die anstelle eines Anhängerbremsventils angeordnete, im Aufbau sehr einfache Notbremseinrichtung, welche in Verbindung mit dem lastabhängig gesteuerten Bremskraftregler die Einsparung eines aufwendigen Anhängerbremsventils ermöglicht, ergibt eine Verbilligung der Anlage. Für den Bremskraftregler kann in vorteilhafter Weise ein Gerät verwendet werden, das auch im Motorfahrzeug Verwendung findet.

Vorteilhafte Weiterbildungen und Ausgestaltungen der Erfindung sind den Unteransprüchen zu entnehmen.

Die Verwendung einer durch die DE-AS 273 98 84 bekannt gewordenen Ventilkombination eines lastabhängig gesteuerten Bremskraftreglers mit einem Relaisventil, ergibt eine weitere kostengünstige Vereinfachung der Anhängerbremsanlage.

Die Erfindung wird nachfolgend an Hand eines Ausführungsbeispiels, welches in Zeichnungen dargestellt ist, näher erläutert.

Es zeigen :

Figur 1 eine lastabhängig gesteuerte Zweileitungs-Anhängerbremsanlage in schematischer Darstellung, deren Bremskraftregler mit einem Relaisventil eine Baueinheit bildet.

Figur 2 das Notbremsventil, welches gemäß Fig. 1 anstelle eines Anhängerbremsventils dem Bremskraftregler vorgeschaltet ist und

Figur 3 den Bremskraftregler mit integriertem Relaisventil.

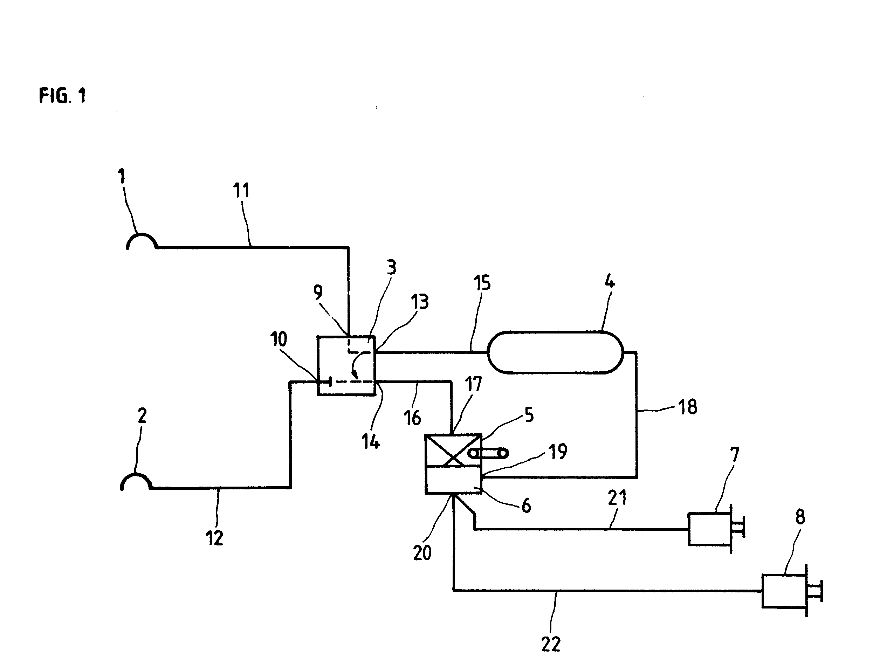

Die Symbole des Anhänger-Bremsschemas gemäß Fig. 1 haben folgende Bedeutung :

1 Anhängerkupplung der Vorratsleitung,
2 Anhängerkupplung der Bremsleitung,
3 Notbremsventil,
4 Vorratsbehälter,
5 Lastabhängig gesteuerter Bremskraftregler,
6 Relaisventil,
7 Vorderachs-Bremszylinder und
8 Hinterachs-Bremszylinder.

Wie zu erkennen, sind Anschlüsse 9 und 10 des Notbremsventils 3 mit der Anhängervorratsleitung 11 und mit der Anhängerbremsleitung 12 verbunden, während weitere Anschlüsse 13 und 14 des Notbremsventils 3 über ein Leitung 15 mit dem Vorratsbehälter 4 und über eine Leitung 16 mit einem Anschluß 17 des Bremskraftreglers 5 in Verbindung stehen. Der Vorratsbehälter 4 ist weiterhin über eine Leitung 18 mit dem Relaisventil 6 über dessen Anschluß 19 verbunden, während ein weiterer Anschluß 20 des Relaisventils 6 über Leitungen 21 und 22 eine Verbindung mit den Bremszylindern 7 und 8 der Vorder- und Hinterachse herstellen.

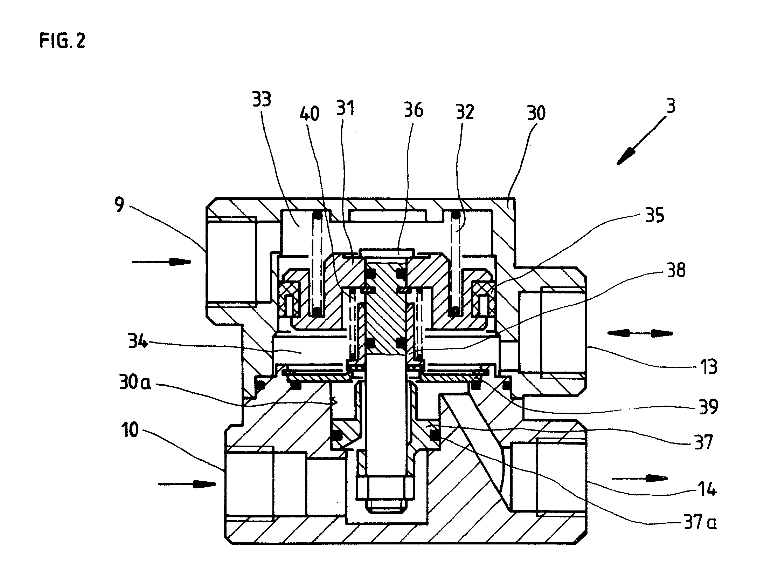

Vor einer ausführlichen Funktionsbeschreibung der dargestellten Bremsanlage während des normalen Fahrebetriebs und beim Eintreten eines Defektes der Vorratsleitung oder der Vorratskupplung, wird nachfolgen zunächst der Aufbau des Notbremsventils an Hand der Fig. 2 beschrieben.

Das mit den Anschlüssen 9, 10, 13, 14 versehene Gehäuse 30 des Notbremsventils 3 besitzt einen Umschaltkolben 31, welcher unter der Spannung einer Feder 32 steht, die sich an der oberen Stirnfläche des Gehäuses 30 abstützt. Der Umschaltkolben 31 teilt den oberen Bereich des Gehäuses 30 in eine oberhalb dieses Kolbens 31 gelegene, mit dem Anschluß 9 verbundene Kammer 33 und in eine unterhalb des Kolbens 31 gelegene, mit dem Anschluß 13 verbundene Kammer 34.

Eine zwischen dem Umschaltkolben 31 und dem Gehäuse 30 angeordnete Radialdichtung 35 ist derart ausgelegt, daß deren Dichtlippe die beiden Kammern 33 und 34 nur in einer Strömungsrichtung, nämlich von Kammer 34 in Kammer 33 abdichtet.

Ein in dem unteren Bereich des Gehäuses 33 eindringender zentraler Stößel 36, der mit seinem oberen Ende mit dem Umschaltkolben 31 fest verbunden ist, trägt an seinem unteren Ende ein in einer Bohrung 30a des Gehäuses 30 geführtes Umschaltglied 37, dessen Führungsfläche mittels eines Dichtringes 37a abgedichtet ist. Ein um den Stößel 36 angeordneter, axial verschiebbarer Ventilkörper 38 bildet mit einem gehäusefesten Ventilsitz 39 ein Ventil 38, 39. Eine sich oben am Umschaltkolben 31 und unten auf den Ventilkörper 38 abstützende, ebenfalls um den Stößel 36 angeordnete Feder 40 drückt den Ventilkörper 38 gegen den Ventilsitz 39.

Die Lage des mit dem Umschaltkolben 31 fest verbundenen Umschaltgliedes 37 ist derart, daß bei einer Funktion des Notbremsventils 3, dessen Auslösung bei der erwähnten Notsituation durch eine Hubbewegung des Umschaltkolbens 31 erfolgt, eine Wirkverbindung zwischen dem Umschaltglied 37 und dem Ventilkörper 38 entsteht und das Ventil 38, 39 somit durch diese mechanische Einwirkung geöffnet wird. Es besteht nunmehr eine Verbindung zwischen dem mit dem Anschluß 13 verbundenen Vorratsbehälter 4 und dem mit dem Anschluß 14 verbundenen Bremskraftregler 5.

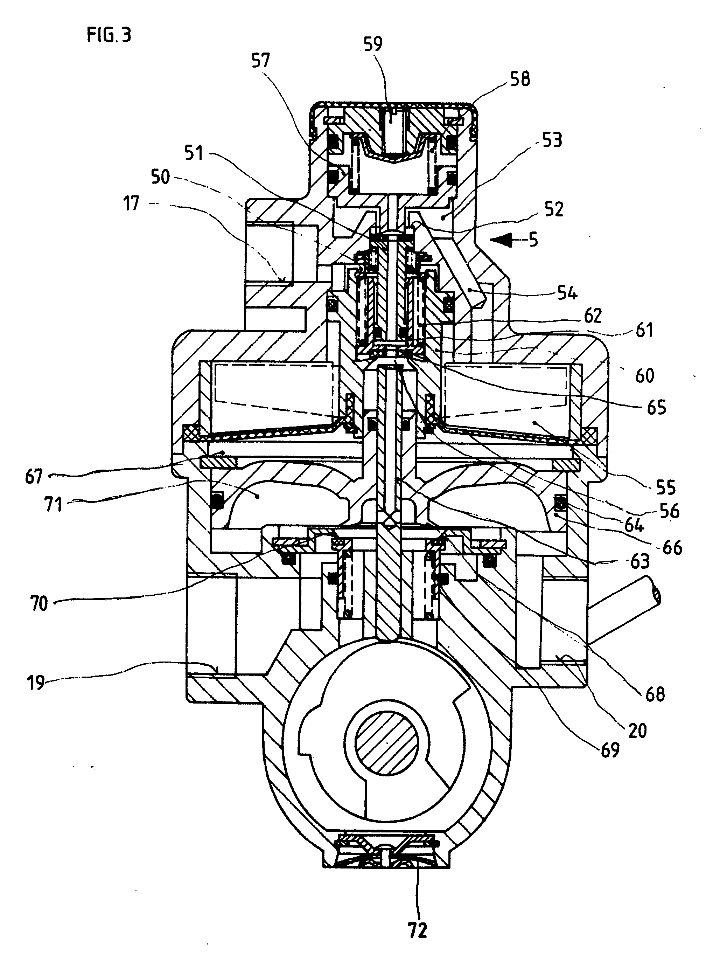

In der nun folgenden Funktionsbeschreibung wird die Funtion des Bremskraftreglers nur soweit beschrieben, wie dies zum Verständnis der Funktion der Anhängerbremsanlage erforderlich ist. Die in der Fig. 3 angegebenen Bezugszeichen beschränken sich infolgedessen nur auf diese Beschreibung.

Die Bremsanlage des Anhängerfahrzeugs ist über die beiden Kupplungen 1 und 2 mit der Bremsanlage des Motorfahrzugs verbunden. Vorratsluft fließt über die Kupplung 1, die Vorratsleitung 2, über den Anschluß 9 des Notbremsventils 3 in dessen Kammer 33 und weiter über die sich durch den Druck öffnende Dichtlippe der Radialdichtung 35 in die Kammer 34 und weiter über den Anschluß 13 und die Leitung 15 in den Vorratsbehälter 4.

Beim Betätigen der Bremse fließt Druckluft über die Bremsleitungskupplung 2 und die Leitung 12 durch das Notbremsventil 3 über dessen Anschluß 10 und 14 und beaufschlagt über die Leitung 16 und den Anschluß 17 sowohl über die Kammer 50 und das Einlaßventil 51, 52 die Vorsteuerkammer 53 als auch über die Bohrung 54 die Kammer 55 oberhalb der Membran 56.

Beim Erreichen eines bestimmten, auf den Vorsteuerkolben 57 wirkenden Steuerdruckes bewegt sich der Vorsteuerkolben 57 gegen die Kraft der Feder 58, die über die Stellschraube 59 einstellbar ist, nach oben, wodurch das Einlaßventil 51, 52 schließt.

Gleichzeitig wirkt der Bremssteuerdruck in der Kammer 50 auf die Oberseite des Kolbens 60 und — wie bereits erläutert — auf die Oberseite der Membran 56 und damit auf den Stufenkolben des Bremsdruckregelventils und drückt diesen dadurch hinunter. Der Doppelventilkörper 61 folgt dieser Bewegung unter dem Einfluß der Feder 62, setzt sich auf die als Auslaßventilsitz ausgebildete Stirnfläche des Stöbels 63 und verschließt somit das Auslaßventil 61, 64 und öffnet bei weiterem Hinabgehen des Bremsdruckregelkolbens 56, 60 Einlaßventil 61, 65. Der über den Anschluß 17 anstehende Steuerdruck wird nun über das Einlaßventil 61, 65 am Führungsspalt zwischen Kolben 60 und Relaiskolben 66 vorbei in die Kammer 67 oberhalb des Relaiskolbens 66 eingesteuert. Der Relaiskolben 66 wird daraufhin nach unten bewegt und schließt mit seinem Sitz 68 das Auslaßventil 68, 69 und öffnet beim weiteren Hinablaufen das Einlaßventil 69, 70, so daß Druckluft über den Anschluß 19 aus dem Druckluftvorratsbehälter 4 in die Kammer 71 und über den Anschluß 20 in die Bremszylinder strömen kann. Unterhalb des Relaiskolbens 66 baut sich der Druck vom Vorratsbehälter auf und bewegt beim Übersteigen des Druckes in der Kammer 67 oberhalb des Relaiskolbens 66 diesen wieder nach oben und schließt das Einlaßventil 69, 70, wodurch eine Bremsdruckabschlußstellung erreicht ist. Der jetzt in den Bremszylindern herrschende Druck entspricht dem in Abhängigkeit von Beladungsgewicht über das Bremsdruckregelventil geregelten Druck.

Nach Beendigung des Bremsvorganges baut sich der Bremssteuerdruck wieder ab, wodurch der Relaiskolben 66 und der Kolben 60 in die jeweils obere Endlage bewegt werden und sogleich die Auslaßventile 61, 64 und 68, 69 des Bremsdruckregelventils bzw. Relaisventils geöffnet werden ; das Druckmittel kann dann über das Entlüftungsventil 72 in die Atmosphäre entweichen.

Fällt nun der Vorratsdruck infolge eines Defektes in der Vorratsleitung 1, 11 aus, so tritt das Notbremsventil 3 in Funktion, indem der unterhalb des Umschaltkolbens 31 in der Kammer 34 befindliche Vorratsdruck den Umschaltkolben 31 gegen die Kraft der Feder 32 nach oben schiebt, so daß das Umschaltglied 37 mit dem Ventilkörper 38 in Eingriff kommt und das Ventil 38, 39 öffnet. Die über das nunmehr offene Ventil 38, 39 aus dem Behälter 4 zum Bremskraftregler 5 strömende Druckluft löst in den Bremszylindern eine Notbremsung aus.

Ein Überströmen der Druckluft durch den Anschluß 10 in die Anhänger-Bremsleitung 12 ist nicht möglich, da der Dichtring 37a und die abdichtende Verbindung des Umschaltgliedes 37 mit dem Ventilkörper 38 dies verhindert.

**Ansprüche**

1. Lastabhängig geregelte Zweileitungs-Anhängerbremsanlage mit folgenden Merkmalen :

a) die von einem Vorratsanschluß am Motorfahrzeug gespeiste Vorratsleitung (11, 15) ist mit wenigstens einem Vorratsbehälter (4) verbunden,

b) die über einen Bremsanschluß am Motorfahrzeug beaufschlagbare Bremsleitung (12, 16) ist mit einem lastabhängig steuerbaren Bremskraftregler (5) verbunden,

c) in den Verbindungsleitungen (18, 21, 22) zwischen Vorratsbehälter (4) und Bremszylindern (7, 8) ist wenigstens ein Relaisventil (6) angeordnet, welches von dem Ausgangsdruck des Bremskraftreglers (5) gesteuert wird,

d) in der Vorratsleitung (11, 15) und in der Bremsleitung (12, 16) ist eine Notbremseinrichtung (3) angeordnet,

e) in der Notbremseinrichtung (3) sind Umschaltmittel (31, 37, 38, 39) vorgesehen, welche im Normalbetrieb die Vorratsleitung und die Bremsleitung durchgängig lassen und bei Minderung bzw. Ausfall der Vorratsspeisung die Bremsleitung (12, 16) unterbrechen sowie den Vorratsbehälter (4) mit dem Bremskraftregler (5) verbinden
dadurch gekennzeichnet, daß die Umschaltmittel (31, 37, 38, 39) auf die Differenz zwischen dem Druck im Vorratsbehälter (4) und dem Druck im stromaufwärts der Notbremseinrichtung (3) liegenden Teil (11) der Vorratsleitung (11, 15) ansprechen.

2. Lastabhängig geregelte Zweileitungs-Anhängerbremsanlage nach Anspruch 1, wobei die Notbremseinrichtung durch folgende Merkmale gekennzeichnet ist :

a) Die Notbremseinrichtung (3) besteht aus einem mit vier Anschlüssen (9, 10, 13, 14) versehenen Gehäuse (30), in welchem die Umschaltmittel angeordnet sind, die aus einem im oberen Bereich des Gehäuses (30) geführten Umschaltkolben (31), einem damit fest verbundenen, im unteren Bereich des Gehäuses (30) geführten Umschaltglied (37) sowie aus einem vom Umschaltglied (37) betätigbaren Ventil (38, 39) bestehen ;

b) ein Bereich der Lauffläche des Umschaltkolbens (31) angeordneter Radial-Dichtring (35) ist derart ausgelegt, daß die von der Anhänger-Vorratsleitung (11) über den einen Anschluß (9) einströmende Vorratsdruckluft an den Dichtlippen des Radial-Dichtringes (35) vorbei und durch den zum Vorratsbehälter (4) führenden Anschluß (13) strömen kann und in entgegengesetzter Strömungsrichtung gesperrt ist ;

c) der dritte und vierte Anschluß (10, 14) ist für die durch die Notbremseinrichtung (3) frei durchströmende, aus der Anhänger-Bremsleitung (12) eingesteuerte und zum Bremskraftregler (5) strömende Bremssteuerdruckluft vorgesehen.

3. Lastabhängig geregelte Zweileitungs-Anhängerbremsanlage nach Anspruch 2, wobei die Notbremseinrichtung durch folgendes Merkmal gekennzeichnet ist :

Der Umschaltkolben (31) ist koaxial zu dem Umschaltglied (37) angeordnet und über einen Stößel (36) mit diesem verbunden.

4. Lastabhängig geregelte Zweileitungs-Anhängerbremsanlage nach den Ansprüchen 2 und 3, wobei die Notbremseinrichtung durch folgendes Merkmal gekennzeichnet ist :

Das Ventil (38, 39) wird aus einem zwischen dem Umschaltkolben (31) und dem Umschaltglied (37) und koaxial zu dem Stößel (36) verschiebbar angeordneten Ventilkörper (38) einerseits und einem unterhalb des Ventilkörpers (38) angeordneten gehäusefesten Ventilsitz (39) andererseits gebildet.

5. Lastabhängig geregelte Zweileitungs-Anhängerbremsanlage nach Anspruch 4, wobei die Notbremseinrichtung durch folgendes Merkmal gekennzeichnet ist :

Der Ventilkörper (38) ist durch eine koaxial zu dem Stößel (36) angeordnete und sich auf dem Umschaltkolben (31) abstützende Feder (40) auf den Ventilsitz (39) gepreßt.

6. Lastabhängig geregelte Zweileitungs-Anhängerbremsanlage nach einem der Ansprüche 2-5, wobei die Notbremseinrichtung durch folgendes Merkmal gekennzeichnet ist :

Eine oberhalb des Umschaltkolbens (31) befindliche Gehäusekammer (33) ist mit dem Anschluß (9) der Anhänger-Vorratsleitung (11) verbunden.

7. Lastabhängig geregelte Zweileitungs-Anhängerbremsanlage nach einem der Ansprüche 2-6, wobei die Notbremseinrichtung durch folgendes Merkmal gekennzeichnet ist :

Eine unterhalb des Umschaltkolbens (31) befindliche, durch das Ventil (38, 39) begrenzte Kammer (34) ist mit dem zum Vorratsbehälter (4) führenden Anschluß (13) verbunden.

8. Lastabhängig geregelte Zweileitungs-Anhängerbremsanlage nach einem der Ansprüche 2-7, wobei die Notbremseinrichtung durch folgendes Merkmal gekennzeichnet ist :

Der Umschaltkolben (31) ist auf seiner dem Ventil (38, 39) abgewandten Seite von einer an der oberen Gehäusewand sich abstützenden Feder (32) beaufschlagt.

9. Lastabhängig geregelte Zweileitungs-Anhängerbremsanlage nach einem der Ansprüche 2-8, wobei die Notbremseinrichtung durch folgendes Merkmal gekennzeichnet ist :

Zur Unterbrechung der Bremsleitung (12, 16) bei offenem Ventil (38, 39) ist eine Abdichtung (37a) zwischen der Gehäuselauffläche (30a) und dem Umschaltglied (37) angeordnet.

**Claims**

1. Load-dependently controlled two-line trailer brake system having the following features :

a) the supply line (11, 15), which is fed by a supply connection on the motor vehicle, is connected to at least one reservoir (4),

b) the brake line (12, 16), which can be acted upon by way of a brake connection on the motor vehicle, is connected to a load-dependently controllable braking force regulator (5),

c) in the connection lines (18, 21, 22) between the reservoir (4) and the brake cylinders (7, 8) there is arranged at least one relay valve (6) which is controlled by the initial pressure of the braking force regulator (5),

d) an emergency braking device (3) is arranged in the supply line (11, 15) and in the brake line (12, 16),

e) in the emergency braking device (3) there are provided switch-over means (31, 37, 38, 39) which in normal operation allow passage through the supply line and the brake line and which, if the supply feed is reduced or fails, block the brake line (12, 16) and connect the reservoir (4) to the braking force regulator (5),

characterised in that the switch-over means (31, 37, 38, 39) respond to the difference between the pressure in the reservoir (4) and the pressure in the part (11) of the supply line (11, 15) lying upstream of the emergency braking device (3).

2. Load-dependently controlled two-line trailer brake system according to claim 1, the emergency braking device (3) being characterised by the following features :

a) the emergency braking device (3) comprises a housing (30) which is provided with four connections (9, 10, 13, 14) and in which there are arranged switch-over means that comprise a switch-over piston (31) guided in the upper region of the housing (30), a switch-over member (37) that is rigidly connected to the switch-over piston and is guided in the lower region of the housing (30), and a valve (38, 39) that can be operated by the switch-over member (37) ;

b) a radial sealing ring (35) arranged in the region of the running surface of the switch-over piston (31) is so constructed that the supply compressed air, which flows in from the trailer supply line (11) by way of a connection (9), can flow past the sealing lips of the radial sealing ring (35) and through the connection (13) leading to the reservoir (4) but is blocked in the opposite direction of flow ;

c) third and fourth connections (10, 14) are provided for the brake control compressed air that flows freely through the emergency braking device (3) and is received from the trailer brake line (12) and flows to the braking force regulator (5).

3. Load-dependently controlled two-line trailer brake system according to claim 2, the emergency braking device being characterised by the following feature :

the switch-over piston (31) is arranged coaxially with the switch-over member (37) and is connected thereto by way of a stem (36).

4. Load-dependently controlled two-line trailer brake system according to claims 2 and 3, the emergency braking device being characterised by the following feature :

the valve (38, 39) is formed, on the one hand, by a valve element (38) that is located between the switch-over piston (31) and the switch-over member (37) and can be displaced coaxially with the stem (36); and, on the other hand, by a valve seat (39) arranged below the valve element (38) and fixed with respect to the housing.

5. Load-dependently controlled two-line trailer brake system according to claim 4, the emergency braking device being characterised by the following feature :

the valve element (38) is pressed onto the valve seat (39) by a spring (40) which is arranged coaxially with the stem (36) and is based on the switch-over piston (31).

6. Load-dependently controlled two-line trailer brake system according to one of claims 2 to 5, the emergency braking device being characterised by the following feature :

a housing chamber (33) located above the switch-over piston (31) is connected to the connection (9) of the trailer supply line (11).

7. Load-dependently controlled two-line trailer brake system according to one of claims 2 to 6, the emergency braking device being characterised by the following feature :

a chamber (34), which is located below the switch-over piston (31) and defined by the valve (38, 39), is connected to the connection (13) leading to the reservoir (4).

8. Load-dependently controlled two-line trailer brake system according to one of claims 2 to 7, the emergency braking device being characterised by the following feature :

the switch-over piston (31) is acted upon on its side remote from the valve (38, 39) by a spring (32) that is based on the upper wall of the housing.

9. Load-dependently controlled two-line trailer brake system according to one of claims 2 to 8, the emergency braking device being characterised by the following feature :

for the purpose of blocking the brake line (12, 16) when the valve (38, 39) is open, a seal (37a) is arranged between the running surface (30a) on the housing and the switch-over member (37).

## Revendications

1. Installation de frein à deux conduites réglée en fonction de la charge, pour une remorque, avec les caractéristiques suivantes.

a) La conduite d'alimentation (11, 15) alimentée par un raccord d'alimentation sur le véhicule tracteur est reliée à au moins un réservoir d'alimentation (4).

b) La conduite de freinage (12, 16) que peut solliciter un raccord de freinage sur le véhicule moteur est reliée à un régulateur de force de freinage (5) qui peut être commandé par la charge.

c) Dans les conduites de liaison (18, 21, 22) entre le réservoir d'air (4) et les cylindres de frein (7, 8), est disposée au moins une soupape relais (6) commandée par la pression de sortie du régulateur de force de freinage (5).

d) Dans la conduite d'alimentation (11, 15) et dans la conduite de freinage (12, 16) est disposé un dispositif de freinage d'urgence (3).

e) Dans le dispositif de freinage d'urgence (3) sont prévus des moyens de commutation (31, 37, 38, 39) qui, en marche normale, laissent passer dans la conduite d'alimentation et dans la conduite de freinage et qui, en cas de diminution ou de défaillance de l'alimentation, interrompent le débit sur la conduite de freinage (12, 16) et relient le réservoir d'air (4) au régulateur de la force de freinage (5)

caractérisée en ce que, les moyens de commutations (31, 37, 38, 39) réagissent à la différence entre la pression qui règne dans le réservoir d'air (4) et la pression qui règne dans la partie (11) de la conduite d'alimentation (11, 15) située en amont du dispositif de freinage d'urgence (3).

2. Installation de frein à deux conduites réglée en fonction de la charge, pour une remorque, selon la revendication 1, où le dispositif de freinage d'urgence est caractérisé par les caractéristiques suivantes.

a) Le dispositif de freinage d'urgence (3) est constitué d'un carter (30) muni de quatre raccords (9, 10, 13, 14) et dans lequel sont disposés les moyens de commutation qui sont constitués d'un piston de commutation (31) guidé dans la zone supérieure du carter (30), d'une pièce de commutation (37) solidarisée avec ce piston et guidée dans la zone inférieure du carter (30) ainsi que d'une soupape (38, 39) que peut manœuvrer la pièce de commutation (37).

b) Une bague d'étanchéïté radiale (35) disposée dans la zone de la portée du piston de commutation (31) est conçue de façon que l'air comprimé venant du réservoir et s'écoulant depuis la conduite d'alimentation de la remorque (11) en passant par le raccord (9) peut passer le long des lèvres d'étanchéïté de la bague d'étanchéïté radiale (35) et peut s'écouler par le raccord (13) conduisant au réservoir d'air (4) mais ne peut pas passer en sens opposé.

c) Le troisième et quatrième raccord (10, 14) sont prévus pour l'air comprimé de commande de freinage qui s'écoule librement à travers le dispositif de freinage d'urgence (3) en venant de la conduite de freinage de la remorque (12) et en allant vers le régulateur de la force de freinage (5).

3. Installation de frein à deux conduites réglée en fonction de la charge, pour une remorque, selon la revendication 2, où le dispositif de freinage d'urgence est caractérisé par la caractéristique suivante :

Le piston de commutation (31) est disposé coaxialement à la pièce de commutation (37) et il lui est relié par l'intermédiaire d'un coulisseau (36).

4. Installation de freinage à deux conduites réglée en fonction de la charge, pour une remorque, selon les revendications 2 et 3, où le dispositif de freinage d'urgence est caractérisé par la caractéristique suivante :

La soupape (38, 39) est constituée d'une part d'un corps de soupape (38) disposé, avec possibilité de coulissement, entre le piston de commutation (31) et la pièce de commutation (37) et coaxialement au coulisseau (36), et, d'autre part, d'un siège de soupape (39) fixe par rapport au carter et disposé en dessous du corps de soupape (38).

5. Installation de frein à deux conduites réglée en fonction de la charge, pour une remorque, selon la revendication 4, où le dispositif de freinage d'urgence est caractérisé par la caractéristique suivante :

Le corps de soupape (38) est poussé sur le siège de soupape (39) par un ressort (40) disposé coaxialement au coulisseau (36) et s'appuyant sur le piston de commutation (31).

6. Installation de frein à deux conduites, réglée en fonction de la charge, pour une remorque, selon l'une des revendications 2-5 où le dispositif de freinage d'urgence est caractérisé par la caractéristique suivante :

Une chambre du carter (33) située au-dessus du piston de commutation (31) est reliée au raccord (9) de la conduite d'alimentation en air (11) de la remorque.

7. Installation de frein à deux conduites réglée en fonction de la charge, pour une remorque, selon l'une des revendications 2-6 où le dispositif de freinage d'urgence est caractérisé par la caractéristique suivante :

Une chambre (34) située sous le piston de commutation (31) et limitée par la soupape (38, 39) est reliée au raccord (13) qui conduit au réservoir d'air (4).

8. Installation de frein à deux conduites réglée en fonction de la charge, pour une remorque, selon l'une des revendications 2-7 où le dispositif de freinage d'urgence est caractérisé par la caractéristique suivante :

Le piston de commutation (31) est sollicité, sur sa face opposée à la soupape (38, 39), par un ressort (32) qui s'appuie contre la paroi supérieure du carter.

9. Installation de frein à deux conduites réglée en fonction de la charge, pour une remorque, selon l'une des revendications 2-8, où le dispositif de freinage d'urgence est caractérisé par la caractéristique suivante :

Pour interrompre le débit d'air de la conduite de freinage (12, 16) alors que la soupape (38, 39) est ouverte, une garniture d'étanchéïté (37a) est disposée entre la portée du carter (30a) et la pièce de commutation (37).

FIG. 1

FIG.2

0 046 166

FIG. 3